(19) Europäisches Patentamt
European Patent Office
Office européen des brevets

(11) **EP 3 317 635 B1**

(12) **EUROPEAN PATENT SPECIFICATION**

(45) Date of publication and mention
of the grant of the patent:
**07.08.2024 Bulletin 2024/32**

(21) Application number: **16751638.4**

(22) Date of filing: **21.06.2016**

(51) International Patent Classification (IPC):
*G06T 7/12* (2017.01)   *G06T 7/136* (2017.01)
*G06T 7/00* (2017.01)   *G01M 17/02* (2006.01)

(52) Cooperative Patent Classification (CPC):
**G06T 7/001; G01M 17/027; G06T 7/12;**
**G06T 7/136;** G06T 2207/20021; G06T 2207/20216;
G06T 2207/20224; G06T 2207/30164

(86) International application number:
**PCT/IB2016/053678**

(87) International publication number:
**WO 2017/001968 (05.01.2017 Gazette 2017/01)**

(54) **METHOD AND APPARATUS FOR DETECTING DEFECTS ON THE SURFACE OF TYRES**

VERFAHREN UND VORRICHTUNG ZUR DETEKTION VON DEFEKTEN AUF DER OBERFLÄCHE
VON REIFEN

PROCÉDÉ ET APPAREIL DE DÉTECTION DE DÉFAUTS SUR LA SURFACE DE PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2015 IT UB20151872**

(43) Date of publication of application:
**09.05.2018 Bulletin 2018/19**

(73) Proprietor: **Pirelli Tyre S.p.A.
20126 Milano (IT)**

(72) Inventors:
• **VANDINI, Lara**
**Modena (IT)**
• **BALLARDINI, Valeriano**
**40026 Imola (IT)**
• **GHIDOTTI PIOVAN, Alessandro**
**40026 Imola (IT)**
• **REGOLI, Fabio**
**20126 Milano (IT)**

(74) Representative: **Tirloni, Bartolomeo**
**BTA Srl
2nd floor
Viale Papa Giovanni XXIII, 106
24121 Bergamo (IT)**

(56) References cited:
**EP-A1- 1 120 640      EP-A1- 1 742 041
US-A1- 2011 013 823**

• **GHANTA SINDHU ET AL: "A Hessian-based
methodology for automatic surface crack
detection and classification from pavement
images", OPTOMECHATRONIC MICRO/NANO
DEVICES AND COMPONENTS III : 8 - 10
OCTOBER 2007, LAUSANNE, SWITZERLAND;
[PROCEEDINGS OF SPIE , ISSN 0277-786X],
SPIE, BELLINGHAM, WASH, vol. 9437, 1 April
2015 (2015-04-01), pages 94371Z - 94371Z,
XP060052534, ISBN: 978-1-62841-730-2, DOI:
10.1117/12.2084370**

## Description

The present invention relates to a method and an apparatus for detecting the possible presence of defects on the surface of a tyre.

By the term 'defect' it is meant any deviation from a desired condition, irrespective of the fact that such deviation gives rise to a degradation of the performance of the tyre (which can thus be discarded or downgraded) or consists of a simple anomaly (e.g. aesthetic) that does not cause the tyre to be discarded or downgraded. The defects may for example be portions with non-vulcanised compound, alterations in shape, cuts, creeps in the carcass, presence of foreign bodies on the surface, etc.

By "tyre" it is meant the finished tyre, that is, after the moulding and vulcanisation steps. Once the green tyre has been prepared, a moulding and vulcanisation treatment is typically carried out in order to determine the structural stabilisation of the tyre through cross-linking of the elastomeric compositions as well as to impart a desired tread pattern thereon and any distinguishing or information graphic signs at the sidewalls.

According to a typical method, during the moulding and vulcanisation step, a suitable bladder (typically of an elastomeric compound) is inserted inside the tyre and made to expand (e.g. pneumatically) against the inner surface of the same, in order to push the tyre against the outer mould and ensure the proper adhesion thereof to the same. This bladder is typically externally grooved with a pattern of grooves in order to facilitate the local mutual sliding thereof between the inner surface of the tyre and the outer surface of the bladder during vulcanisation and moulding. Such a pattern can facilitate the outflow of air trapped between the bladder and the tyre and/or facilitate the detachment between the bladder and the tyre at the end of the moulding and vulcanisation. Therefore the inner surface of the tyre has a corresponding "pattern", typically in relief. Typically, the pattern comprises a series of rectilinear and parallel spans typically distributed with substantial periodicity along the circumferential direction, and/or a dense network of contiguous geometric shapes (in the jargon called 'pebble edge').

In the present description and claims, by 'pattern' it is more generally meant a set of linear elements placed on the inner or outer surface of a tyre, such linear elements being generated during the moulding and vulcanisation step of the tyre and being typically in relief, but being able to also be in low relief or simply two-dimensional, i.e. at the same elevation level as the rest of the surface. For example, the tread grooves fall within the definition of pattern. Such surface linear elements are typically rectilinear segments interconnected in a continuous network, but can more generally have any shape and/or surface distribution. Such surface linear elements typically cause a colour change and/or reflectivity/diffusivity of an incident light compared to the rest of the surface.

Typically, a tyre for vehicle wheels has a substantially toroidal structure around an axis of symmetry coinciding with the axis of rotation of the same during operation, and has an axial middle line plane orthogonal to the axis of symmetry, said plane typically being a geometrical (substantial) symmetry plane (ignoring any minor asymmetries, such as tread pattern and/or parts of the inner structure).

By "inner surface" of the tyre it is meant the surface extending inside said toroidal structure from one to the other bead (in other words, the surface no longer visible after the coupling of the tyre with the respective mounting rim).

The inner surface typically belongs to a layer of elastomeric material, usually called "liner", having optimal air impermeability characteristics. Certain defects on the inner surface, such as cuts, open joints, creeps, etc., may impair the air impermeability of the tyre.

In the context of the production processes of tyres for vehicle wheels, the need has been felt to perform quality inspections on finished products, with the aim to prevent defective tyres from being put on the market, and/or to progressively adjust the apparatuses and machinery used so as to improve and optimise the execution of the operations carried out in the production process.

These quality inspections include for example those performed by human operators who dedicate a fixed time to a visual and tactile inspection of the tyre; if, in the light of his own experience and sensitivity, the operator were to suspect that the tyre does not meet certain quality standards, the same tyre is subjected to further inspections, through a more detailed human inspection and/or suitable equipment in order to deepen the evaluation of any structural and/or qualitative deficiencies.

Document WO2013/045594A1 describes a quick method of analysis of the elements in relief on the inner surface of a tyre, comprising the steps of: capturing a three-dimensional image of the surface assigning a grey level value to each pixel of the image proportional to the topographical elevation of that point to obtain a starting image, transforming the captured image in an orthogonal reference system (OXY) in which the abscissa axis (OX) represents the circumferential values, and the ordinate axis (OY) the radial values, assigning a value of the altitude gradient (f(p)) to each pixel on the surface, comparing its elevation with the elevation of a discrete and small number of points placed on a straight line passing through the respective pixels (p) and oriented in the circumferential direction.

The article Ghanta Sindhu et al: "A Hessian-based methodology for automatic surface crack detection and classification from pavement images", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9437, 1 April 2015(2015-04-01), pages 94371Z-94371Z, DOI: 10.1117/12.2084370 ISBN: 978-1-62841-730-2 discloses an automatic system for acquisition, detection, classification and evaluation of pavement surface cracks utilizing a Hessian-based multi-scale filter.

In the field of tyre quality control, the Applicant has set itself the problem of detecting the possible presence of defects on the surface of a tyre by the optical acquisition of digital images and subsequent processing thereof. The Applicant has observed for the quality control to be used "in line" in a plant for the production of tyres, it is necessary that the inspections itself is performed in a reduced time and with reduced costs. In this context, the computational requirement of the processing algorithms plays a crucial role, since when it is excessive, the control times increase unacceptably and/or the computational capacity required makes the control unfeasible.

By "digital image", or equivalently "image", it is generally meant a set of data, typically contained in a computer file, in which each tuple of coordinates (typically each pair of coordinates) of a finite set (typically two-dimensional and matrix, i.e. N rows x M columns) of tuples of spatial coordinates (each tuple corresponding to a pixel) is associated with a corresponding set of numerical values (which may be representative of different magnitudes). For example, in monochrome images (such as those in grey levels or 'greyscale'), such a set of values consists of a single value in a finite scale (typically 256 levels or tones), this value for example being representative of the luminosity (or intensity) level of the respective tuple of spatial coordinates when displayed. A further example is represented by colour images, in which the set of values represents the luminosity level of a plurality of colours or channels, typically the primary colours (for example red, green and blue in RGB coding and cyan, magenta, yellow and black in CMYK coding). The term 'image' does not necessarily imply the actual display of the same.

In the present description and claims, any reference to a specific "digital image" (for example, the two-dimensional digital image initially acquired on the tyre) includes more generally any digital image obtainable through one or more digital processing of said specific digital image (such as, for example, filtering, equalization, smoothing, binarisation, thresholding, morphological transformations (opening, etc.), derivative or integral calculations, etc.).

The Applicant also noted that in the three-dimensional images (where each pixel is associated with a surface height information obtained, for example, by laser triangulation), some two-dimensional defects (i.e. that do not involve an alteration of the surface height, such as cut at mating or thin edges) are hardly detectable or undetectable at all, using image processing.

The Applicant thus has realised that it is advantageous to detect and analyse two-dimensional images (in addition or as an alternative to 3D ones), in which each pixel is associated with information representative of the colour and/or diffusivity/reflectivity of the respective surface point, such as the images detected by the common digital cameras or video-cameras (e.g. CCD).

By 'point of the surface' it is meant a surface portion having a small (not zero) extension compatible with the size of a pixel of an acquired image of the surface.

The Applicant noted that the defects can be confused with spurious elements in the image, for example due to irregularities in the surface reflectivity/diffusivity, and/or with the background noise in the image, e.g. resulting from the digital image optical and electronic acquisition process.

Moreover, according to the Applicant, if there is a pattern on the surface of the tyre, the pattern sections may have, in the images, features similar or otherwise that can be confused with the defects, particularly with cuts.

The Applicant, in the context of tyre quality control (in particular for the detection of defects on the surface of tyres) based on the acquisition and processing of digital images in an industrial tyre production line, with reduced costs and computational requirements, reliable in the result obtained and also with a high degree of sensitivity in the detection of defects, in particular being able to effectively distinguish surface defects (in particular, elongated defects such as cuts) from the noisy or otherwise disturbed background of the image and/or from the pattern sections, has therefore posed the problem of developing a method for detecting defects on the surface of tyres substantially able to select the pixels belonging to the defects, in particular to cuts, from the rest of the image.

In a first aspect thereof, the invention relates to a method for detecting defects in accordance to claim 1.

It is noted that the meaning of the term 'luminosity value' denotes the 2D nature of the image, i.e. the nature of a normal photography the acquisition of which is simple and fast.

The Applicant has found that the above method, in particular the decision of whether each pixel belongs to a candidate defect on the basis of a first parameter representative of a second derivative of the luminosity values calculated in said each pixel, allows highlighting an important category of defects including cuts. Defects in this category are thin and have an elongated shape, therefore, for each pixel belonging to the defect it is possible to identify two directions orthogonal to each other: one directed according to the local development of the defect (e.g. locally tangent to the defect) and the other orthogonal thereto. The Applicant has realised that along the direction orthogonal to the development of the defect or cut, along which the luminosity values follow a valley or ridge shape, the second derivative takes on a particularly high value. In particular, in the typical case in which the pixels belonging to the cut are very dark, while the background pixels are lighter, the second derivative along the direction orthogonal to the cut takes on a high positive value. Deciding on the basis of the second derivative it is therefore possible to highlight the pixels belonging to the central area of the thin and elongated defects such as cuts in the image acquired, distinguishing them from other elements of the image without these features. Preferably it is contemplated, for each pixel, to identify a possible main local extension direction of a possible structure passing through said pixel, wherein said first parameter is representative of the second derivative calculated along a direction orthogonal to said main local extension direction. In this way, advantageously, the second derivative is analysed along the direction that ideally shows the strongest variation of the second derivative, when said structure is present (e.g. a cut).

Preferably, said first parameter is representative of a main eigenvalue of a Hessian matrix. The Applicant has realised that, in the presence of a cut, the secondary eigenvector of the Hessian matrix is directed along said main local development direction of the cut, that the main eigenvector of the Hessian matrix is directed along the direction orthogonal to the main local development direction and that the eigenvalue of the latter (called 'main eigenvalue' or 'maximum eigenvalue') represents the value of the second derivative along this direction. Therefore, by calculating the main eigenvalue of the Hessian matrix, the second derivative is analysed along the potentially most advantageous direction, in a reliable and consistent manner and with a low consumption of computational resources.. Preferably, calculating said first parameter comprises calculating said Hessian matrix and extracting therefrom said principal eigenvalue and a relative principal eigenvector, more preferably extracting therefrom also a secondary eigenvalue and relative secondary eigenvector.

Preferably, it is contemplated to binarise said at least one image on the basis of the comparison between said first parameter and said first threshold value.

It is contemplated to calculate, for each pixel of said digital image, a second parameter representative of a gradient modulus in said pixel and to establish whether each pixel belongs to a candidate defect also as a function of said second parameter, by comparing said second parameter with a second threshold value. More preferably, it is contemplated to binarise said digital image also on the basis of the comparison between said second parameter and said second threshold value. In this way, advantageously, all pixels or sets of pixels having both high second derivative (e.g. high principal eigenvalue) and low gradient modulus can be identified as belonging to candidate defects. The Applicant has in fact realised that the pixels belonging to defects such as cuts, in addition to having a high second derivative (in particular along said direction orthogonal to the cut), also have a low gradient modulus (since the pixels that belong to the cut typically correspond to local minima of the luminosity values). On the other hand, the pixels with a high second derivative but high gradient modulus are discarded, for example the areas with large luminosity range corresponding for example to the edges of the release agent spots or to the walls of the pattern segments.

Preferably, it is contemplated to establish whether each pixel belongs to a candidate defect also as a function of the respective luminosity value, more preferably by comparing said luminosity value with a third threshold value. In this way, advantageously, all pixels or sets of pixels that, in addition to having a high second derivative and low gradient modulus, also have a luminosity value consistent with the potential defect nature of the pixel, can be identified as belonging to candidate defects. The Applicant has in fact realised that the pixels belonging to defects such as cuts also have low luminosity value (i.e. are dark). For example, in this way, any lines of pixels with an intermediate luminosity value on a very light background (e.g. high reflectivity area), due for example to surface scratches that are not cuts, are advantageously not considered as candidate defects.

Preferably, said surface portion is a circumferential inner surface portion, more preferably corresponding to an angle in the centre that is greater than or equal to 30°, more preferably greater than or equal to 60°, typically equal to at least one round angle.

Preferably, said circumferential inner surface portion has a width in a plane passing by said axis, greater than or equal to 50 mm, more preferably greater than or equal to 80 mm, and/or smaller than or equal to 200 mm, more preferably smaller than or equal to 150 mm. Preferably, the method is repeated by varying each time said circumferential inner surface portion so that all the surface portions make up at least one whole inner surface half-portion that extends from the median plane to a bead.

Preferably, the method comprises carrying out the analysis described above while keeping the tyre resting on one of the sidewalls. Preferably, the method comprises tilting the tyre so as to rest it on an opposite sidewall and repeating the operations described above. According to a second aspect thereof, the invention relates to an apparatus for analysing tyres according to claim 12.

Preferably, the detection system comprises a linear camera having an objective line lying on an optical plane passing by the linear camera.

Preferably, said at least one source includes a first light source, a second light source and a third light source adapted to emit a first, a second and a third light radiation, respectively, for illuminating said surface portion, more preferably a linear surface portion coincident with or near the objective line.

Preferably, said first light source and second light source lie on opposite sides, respectively, with respect to said optical plane.

Preferably each of said first and second light source is adapted to illuminate said objective line with a respective grazing light (i.e. that forms an acute angle with the normal to the surface at each point of said objective line greater than 40°, more preferably greater than 55°), and said third light source is adapted to illuminate said objective line with diffuse light. In one embodiment, the detection system comprises a mirror having a reflective surface placed at the third light source perpendicular to the optical plane and intersecting the latter (typically on the median line of the mirror) in a manner so as to reflect said objective line in the optical plane by an angle greater than or equal to 30° or smaller than or equal to 135°. In this way, advantageously, during the inspection of the inner surface of the tyre, the linear camera remains positioned in the central area of the tyre while the group with the light sources works close to the inner surface.

Preferably, the apparatus comprises a command and control unit configured for:

- activating, in alternating sequence, said first light source, second light source and third light source; and
- driving said linear camera for respectively acquiring said first, second and third image synchronously with the activation of said first light source, second light source and third light source, respectively. In this way, it is possible to acquire both an image in diffuse light and two images in grazing light.

Preferably, the apparatus includes a movement member adapted to rotate said support, about an axis of rotation thereof, the command and control unit being configured for controlling said movement member.

Further features and advantages will become more apparent from the detailed description of some exemplary but non-limiting embodiments of a method and an apparatus for analysing tyres in a tyre production line, according to the present invention. Such description will be given hereinafter with reference to the accompanying figures, provided only for illustrative and, therefore, non-limiting purposes, in which:

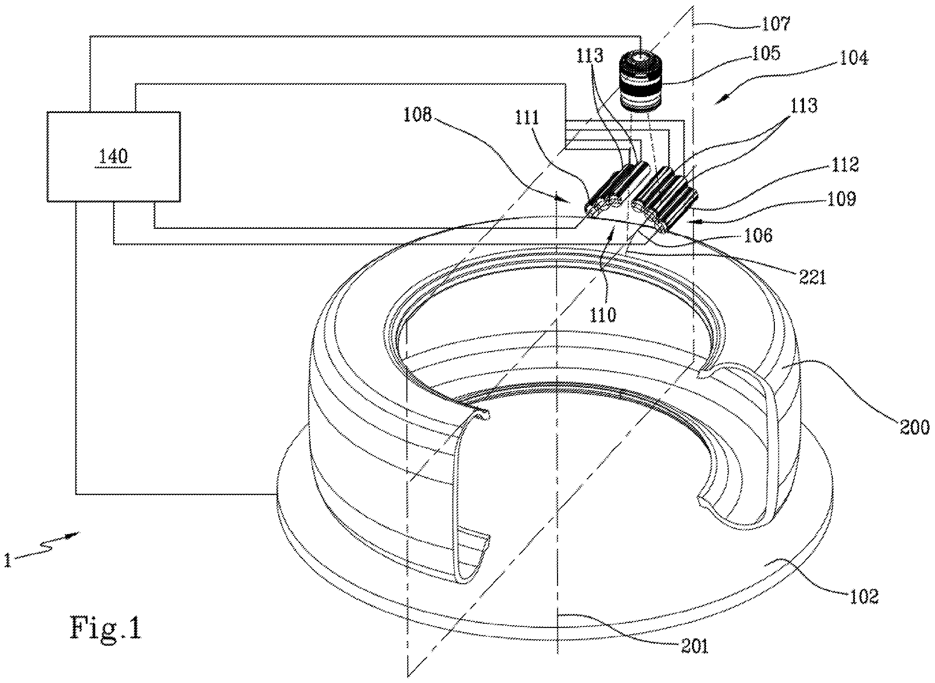

- figure 1 shows a schematic diagram, in terms of functional blocks, of an apparatus for analysing the surface of tyres according to the present invention;
- figure 2 shows a schematic view of a part of the apparatus according to the present invention according to an embodiment variant;
- figures 3-14 show some steps of the method using a visual representation of respective digital images;
- figure 15 shows a flow chart of the method of the present invention.

With reference to the figures, reference numeral 1 generally indicates an apparatus for analysing a surface of tyres in a tyre production line according to the present invention.

Apparatus 1 comprises a support 102 adapted to support tyre 200 on a sidewall and to rotate the same about an axis of rotation 201 coinciding with the axis of rotation of the tyre and typically arranged according to the vertical. Support 102 is typically operated by a driving member, not further described and shown, since it may exemplarily be of known type.

Apparatus 1 comprises a source 104 adapted to emit at least one light radiation for illuminating a surface portion of the tyre set on the support, and, at a distance from said source, a detection system 105 adapted to detect an optical intensity of the light radiation reflected and/or diffused by the surface portion.

The detection system 105 comprises a camera, preferably linear and having an objective line 106 lying on an optical plane 107 passing by the linear camera and the axis of rotation 201.

Source 104 comprises a first light source 108, a second light source 109 and a third light source 110 adapted to emit a first, a second and a third light radiation, respectively, for illuminating a linear surface portion 211 of said tyre coinciding with the objective line (for example, when the surface portion is planar) or in the vicinity of the objective line (due to the curvilinear trend of the tyre surface).

The detection system 105 is adapted to acquire a respective two-dimensional digital image of the linear surface portion of the surface illuminated by at least one of the first, second and third light radiation.

Typically, the apparatus comprises a robotic arm (not shown) on which the first, second and third light source and the detection system are mounted.

Preferably, the first light source 108 and the second light source 109 consist each of a single respective sub-source 111 and 112. Preferably, the third light source 110 consists of four respective sub-sources 113 distributed on both sides of the optical plane 107 and symmetrically with respect to such plane.

Each sub-source 111-113 has a respective main direction of development which develops parallel to the optical plane 107 and thus to the objective line 106.

Each sub-source typically comprises a plurality of LED light sources placed aligned along the main direction of development.

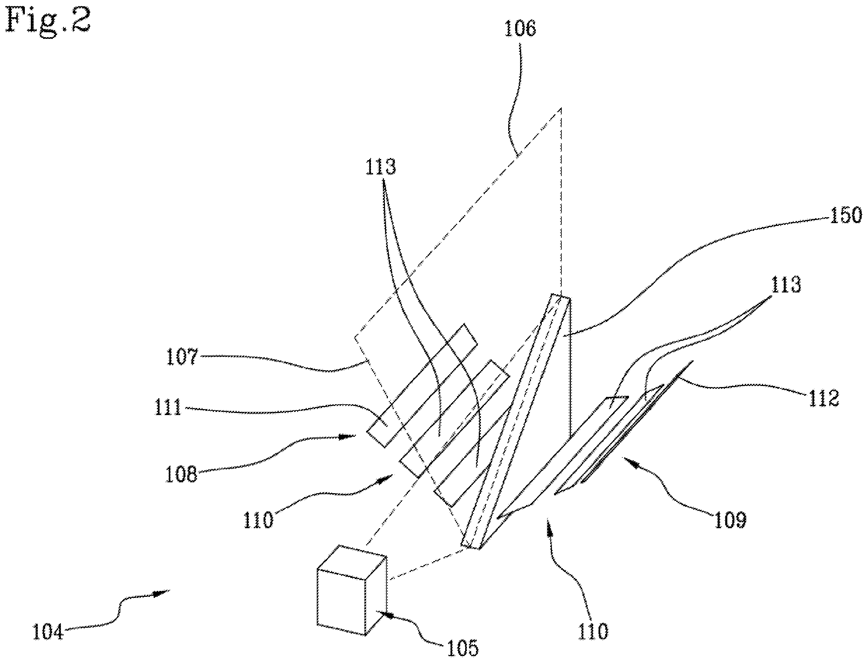

In figure 2, the light sub-sources are schematically shown with reference to their respective emitting surface (exemplarily of rectangular shape), which may for example coincide with a transparent protective and/or diffuser glass. Exemplarily, the sub-sources have a dimension along the main direction of development equal to 6 cm and a dimension along the direction orthogonal to the main direction of development equal to about 1 cm.

Preferably, the sub-sources 111 and 112 lie on opposite sides, respectively, with respect to the optical plane and are equidistant therefrom.

Preferably, the distance of the sub-sources 113 of the third light source from the optical plane 107 is smaller than the distance between each sub-source of said first light source and second light source and the optical plane.

Preferably, the third light source 110 is adapted to illuminate the objective line with diffused light (for example a respective angle having its vertex in each point of the objective line and lying in a plane orthogonal to the objective line, and subtended by the third light source, is equal to about 80°).

In an embodiment of the apparatus particularly adapted for the inspection of the inner surface of the tyre, exemplarily shown in Fig. 2, the detection system includes a mirror 150 (typically also mounted on the robotic arm) having a flat reflective surface placed at the third light source perpendicularly to the optical plane and intersecting the latter on the median line of the mirror, so as to reflect the objective line in the optical plane by an angle exemplarily equal to 90°.

Preferably, a command and control unit 140 is comprised, configured to activate in an alternating sequence the first, second and third light source, and control the linear camera for acquiring a first, second and third image, respectively, in synchronization with the activation of the first, second and third light source, respectively.

The command and control unit is typically configured to also control the handling member of support 102.

The apparatus comprises a processing unit (for example integrated in the command and control unit 140 or in communication therewith or with the detection system 105 for receiving said acquired images) configured for implementing the method according to the present invention.

In operation, a tyre 200 is placed on support 102 and subjected to a (preferably full) rotation around its axis of symmetry 201 in order to detect a two-dimensional digital image of an inner surface portion, preferably along the whole circumferential development.

During the rotation, the command and control unit cyclically activates, in rapid alternating sequence, said first, second and third light source and activates the linear camera to acquire a respective two-dimensional linear digital image (colour or monochrome) of the respective linear surface portion in synchrony with the activation of the first, second and third light source, respectively. By way of example, every single linear digital image comprises 1x2048 pixels in the case of monochrome camera, or 2x2048 pixels in the case of RGB colour or bilinear camera.

By way of example, the time-lag between the acquisition of the first and second linear image, as well as between the second and third linear image and then cyclically between the first and third linear image, is less than 0.2 milliseconds.

Once the desired rotation of the tyre to scan the desired surface portion has been carried out, preferably at least one full rotation in order to acquire all the circular development, a unique digital image is obtained, made with all the linear digital images of the sequence of linear portions, each illuminated with the three light sources.

The processing unit receives such image from the detection system and separates therefrom the corresponding first, second and third image of the entire desired surface portion.

Such images can be substantially superimposed, pixel by pixel, although the real linear surface portion associated with a single linear image does not exactly corresponds to the three images, due to the rotation of the tyre occurred meanwhile. However, the selection of the acquisition frequency of the linear images and of the speed of rotation is such that the three linear images are mutually interlaced and thus comparable pixel by pixel.

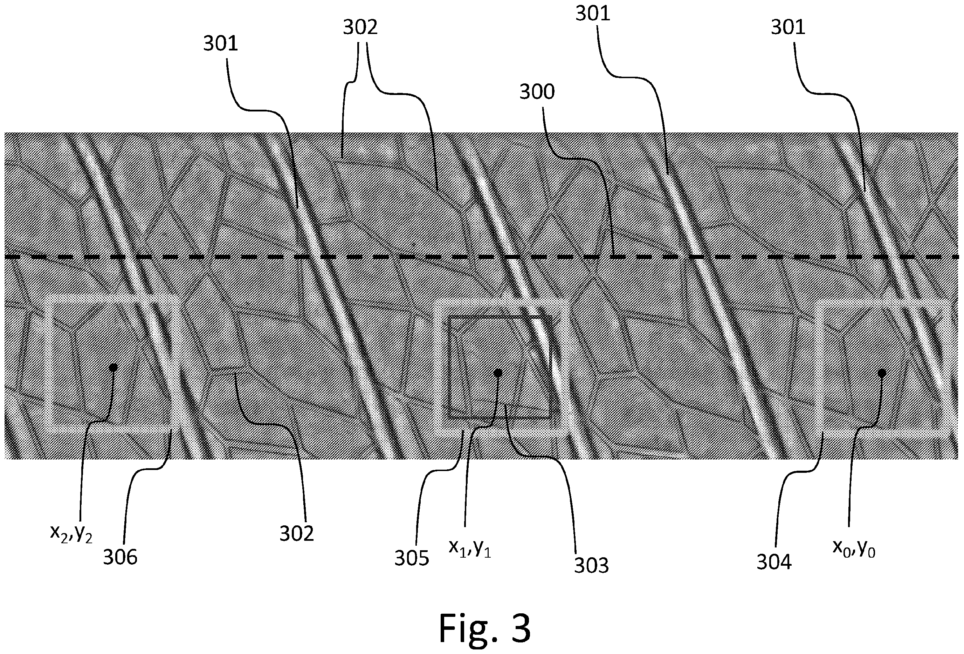

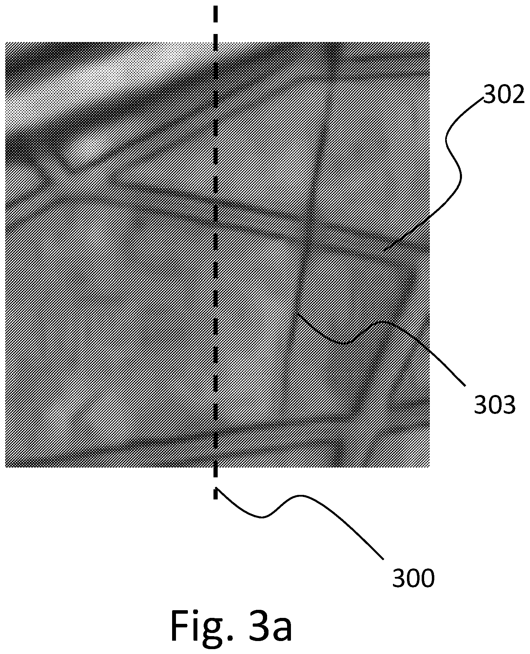

Figure 3 shows an exemplary visual representation in grey scale of an example of said first image, that is, of a two-dimensional digital image, acquired in the visible frequency range, of an inner surface portion of a tyre illuminated with diffused light (totally similar to a common black and white picture). The circumferential direction of the tyre is placed along the horizontal direction in the figure (straight line 300).

In the example in figure 3, each pixel of the digital image is associated with a scalar value (grey level or scale) in a scale of 255 levels directly representative of the reflectivity and/or diffusivity and/or colour of the inner surface point corresponding to the pixel considered. The present invention may also be applied to digital images in which each pixel is associated with a vector value, such as digital colour images. For example, the method described herein may be carried out on each channel/colour or combinations thereof, or on a selected channel (e.g. green, which advantageously provides a better image quality). The digital image on which the method described herein is carried out may coincide with the digital image directly detected by the detection system or, more preferably, may be subjected, before carrying out the method described herein, to a pre-processing to improve the quality thereof. Said pre-processing may comprise one or more of filtering, balancing, noise reductions, smoothing, for example as known in the art. Hereinafter it is assumed that such pre-processing does not change the two-dimensional digital nature of the image, such that each pixel is associated with a luminosity (or tone) value representative of the reflectivity and/or diffusivity and/or colour of the inner surface.

As seen in figure 3, the inner surface of the tyre is grooved by a plurality of reliefs that form a "pattern." The presence of the reliefs produces a variation in the reflectivity of the inner surface detected by the camera. The present invention is also applicable to low relief or simply two-dimensional patterns, i.e. consisting only in a variation of colour and/or reflectivity and devoid of depth. Typically, the pattern comprises a series of rectilinear sections 301 substantially mutually parallel, typically distributed with substantial periodicity along the circumferential direction, and a dense network (in the jargon called 'pebble edge') of substantially rectilinear segments 302 interconnected in a substantially continuous network, the pattern being typically characterised by a substantial periodicity thereof along the circumferential direction. It is noted that the pattern develops on the inner surface of the tyre, which is provided with its own curvature.

Preferably, the pattern consists of closed broken lines (polygons) connected to each other. Typically, the pattern consists of polygons adjacent to each other (e.g. is devoid of isolated polygons).

The pattern has a scheme that is repeated substantially equal thereto in a plurality of positions distributed along the circumferential direction, typically with a substantial circumferential periodicity (for example with a local period variation, in absolute value, falling within 5% of the average period calculated on the whole image), even more typically with continuity along the whole digital image. In the example shown, the pebble edge has a circumferential periodicity equal to twice the periodicity of the rifling, whereby the overall periodicity of the pattern is equal to that of the pebble edge.

As stated said above, reliefs 301, 302 are the imprint left by the pneumatic bladder. In practice, said scheme is typically repeated along the circumferential direction with slight variations in the periodicity and/or shape and/or orientation and/or axial position, while remaining substantially equal, such variations being due for example to the non-uniformity of the bladder expansion and/or positioning, and/or to small distortions of the pattern imprinted on the bladder itself, and/or to phenomena of distortion in the image detection process (for example, due to faulty centring of the axis of rotation of the tyre, non-perfect circularity of the tyre, etc.).

For more clarity, figure 3 shows a circumferential digital image portion long, along direction 300, only two and a half times around the period of the pattern; however, typically the processed digital image corresponds to a circumferential inner surface portion comprising said scheme repeated at least eight-ten times. Preferably, the circumferential inner surface portion processed covers the entire circumferential inner development of the tyre.

Typically, the processed digital image corresponds to a portion of the inner surface having a length in the axial direction (the direction perpendicular to direction 300 in figure 3) of at least 5 cm, preferably equal to at least half of the overall axial development of the tyre crown.

Figure 3 is shown an exemplary defect 303 (shown enlarged in figure 3a which shows a rotated detail of figure 3) consisting in a cut that crosses at least one segment of the pattern.

Preferably, the method provides for deriving a value representative of the pattern period through digital image processing, for example by seeking a maximum of an autocorrelation function (for example, the Pearson correlation coefficient calculated on the values associated with the pixels of the image) between a given portion (in the jargon called 'support') of the digital image (having adequate dimensions, for example circumferential length greater than the period and smaller than three times the period) and a plurality of further portions of the digital image having dimensions equal to the dimensions of said given image portion and arranged in circumferentially distributed positions. Preferably, the circumferential autocorrelation is repeatedly calculated with reference to multiple different supports and partially overlapping in the axial direction of the image, and having the same dimensions, with the aim of selecting the most reliable autocorrelation peak to identify the pattern period. Alternatively, it is provided to acquire a predetermined value of the period, for example from a measurement and/or from the specifications of the bladder.

The method involves identifying a first region 304 of the digital image corresponding to a sub-portion of the scheme, for example having a smaller circumferential development than an entire circumferential development of the scheme (in the example equal to about one third of the circumferential development of the scheme, coinciding with said period). The dimensions of the first region are advantageously consistent with the typical expected dimensions of the defect sought.

It is further provided to identify a respective plurality of regions 305, 306 of the digital image homologous to the first region 304 and distributed along the circumferential direction. Each homologous region contains a respective scheme sub-portion substantially identical to the scheme sub-portion of the first region. To this end, a correlation function is calculated (for example, the Pearson correlation coefficient) between the first region and a portion of the rest of the digital image. Preferably, a first homologous region 305 is first identified by calculating the correlation function between the first region 304 and a plurality of regions having dimensions equal to the first region and arranged in a neighbourhood of a point of the digital image that is circumferentially distant from the first region by a distance equal to a period P. For example, if the coordinates of the centre of the first region 304 are $x_0$, $y_0$, a region of equal dimensions is first identified, having the coordinates $x_0$, $y_0+P$ at the centre. Then, the correlation function is calculated between the first region and all the regions of the same dimensions whose centre is located in the neighbourhood of coordinates $x_0 \pm \Delta x$, $y_0+P \pm \Delta y$, with $\Delta x$, $\Delta y$ equal to an appropriate number of pixels, for example 5-10 pixels. The region having coordinates $x_1$, $y_1$ at the centre, at which the correlation function exhibits a maximum (at least local), is identified as the first homologous region 305.

The algorithm is repeated starting from the first homologous region 305 and seeking a correlation maximum in the neighbourhood of coordinates $x_1 \pm \Delta x$, $y_1+P \pm \Delta y$, in order to locate the second homologous region 306 (having at the centre coordinates $x_2$, $y_2$), and so on iteratively, so as to identify a sequence of homologous regions in succession. In particular, a tuple of coordinates $x_n$, $y_n$ is calculated, corresponding to the centre (or any other reference point) of the tuple of homologous regions.

In the example described herein, the acquisition of the value representative of the pattern period by processing the digital image and identifying such tuple of coordinates are performed on the image in diffuse light (of the type shown in figure 3).

However, the Applicant has verified that even more robust results can be obtained if the calculation operations of the period and/or identification of such tuple (for example the identification of homologous regions through autocorrelation) are carried out on a difference image, in which each pixel is associated with a value representative of the difference of the corresponding luminosity values of the second and third images acquired in grazing light, as described above.

This tuple of coordinates is then shown on the first image in diffuse light in order to identify a corresponding first region and a corresponding plurality of homologous regions in said first image.

It is further provided to calculate a model of the scheme sub-portion, in which each pixel is associated with a mean value of the values associated with the pixels of the first region and of the respective homologous regions of the first image having the same coordinates of said each pixel.

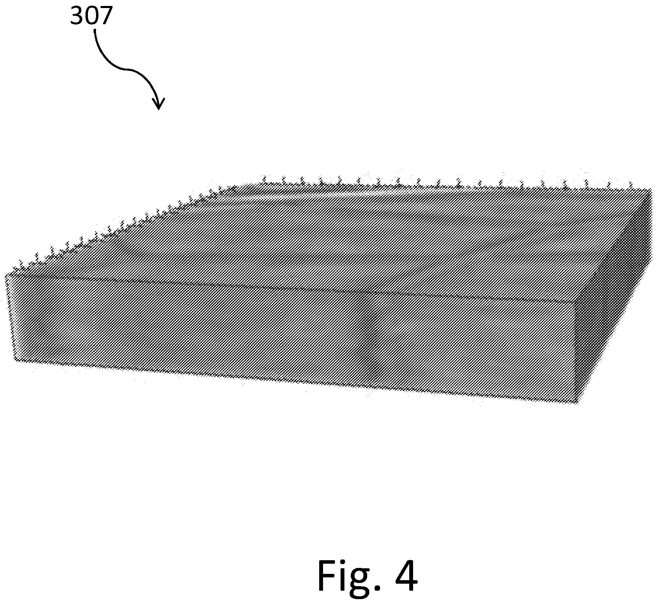

To this end, for illustration purposes, figure 4 shows a 3D graphical representation of a stack 307 of regions obtained by overlapping of the first region (for example at the base of the stack) and all its respective homologous regions of the first image in diffuse light. As can be seen, each pixel at the base of the stack corresponds to a set of statistical values (scalar, or grey scale) lying on the corresponding vertical column. Such statistical set has an intrinsic variance due to the deformations described above.

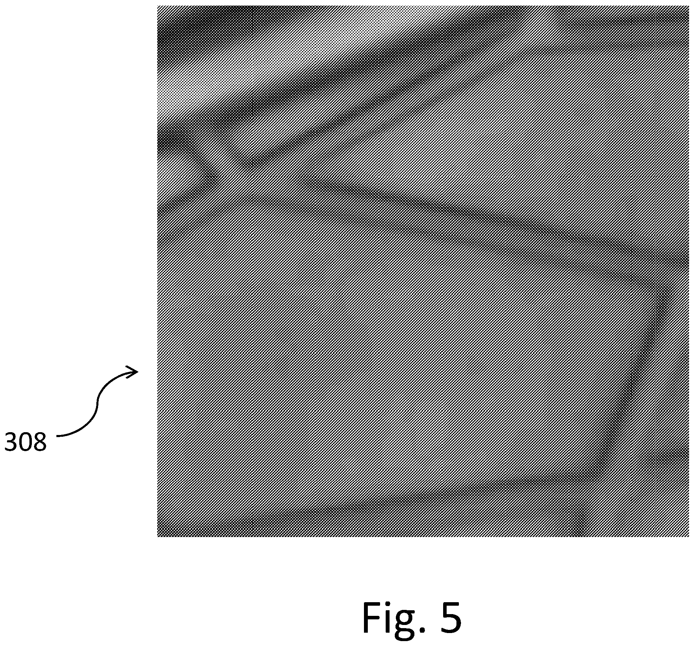

Preferably, the digital model 308 of the scheme sub-portion (shown in figure 5) associated with the first region 304 is calculated considering the median value of the corresponding statistical set for each pixel of the base of the stack. A model 308 is thus generated which has in each relative coordinate pixel (i,j) the median value (e.g. grey level) calculated on all of the relative coordinate pixels (i,j) of the set of the first region and of the homologous regions. As can be seen in figure 5, the model thus calculated does not contain contributions from any defects, in addition to exhibiting a high image quality (e.g. in terms of noise and/or sharpness).

Preferably, a digital model of the respective scheme sub-portion is calculated according to the above for a plurality of first regions, each comprising the respective scheme sub-portion. The first regions form a connected digital image portion having circumferential development about equal to the period. In this way, a digital model is calculated for the whole scheme that makes up the pattern. Preferably, the first regions are mutually partially overlapping in the axial direction and/or in the circumferential direction, in order to improve the reliability of the method.

Once the models of respective sub-portions have been constructed, a pattern model is obtained by replacing, in said first image, said model of the respective scheme sub-portion to each first region and to the respective homologous regions. By the above self-learning procedure, an image is obtained that is a global model of the surface portion without defects, that is easily comparable with the actual image.

For the purpose of this comparison, it is advantageous to use the gradient modulus and orientation as described hereinafter.

In one embodiment, for each pixel of the pattern model in luminosity values calculated on the first image, it is contemplated to calculate a modulus value and an orientation value of a gradient of the luminosity values associated with the pixels, thereby obtaining a pattern model in gradient modulus values and in gradient orientation values, respectively. In order to reduce the use of computing resources, it is preferable to calculate these gradient modulus and gradient orientation values on each scheme sub-portion model in luminosity values, and then proceed with the above operation of obtaining a pattern model by replacement.

In an alternative and preferred embodiment, the operations described above for the identification of homologous regions and the calculation of a respective scheme sub-portion model (preferably by the use of a tuple of coordinates identified on the difference image) are conducted on the gradient modulus values and on the gradient orientation values calculated on the first image in luminosity values. In this case, it is not strictly necessary to calculate the pattern model in luminosity values on the first image.

For the purposes of calculating the gradient modulus and orientation values, the gradient of the luminosity values is calculated for each digital image pixel along the two horizontal and vertical coordinates of the image, thus obtaining a vector with two components: a modulus (e.g. the root of the quadratic sum of the two components) and an orientation in the digital image (e.g. the angle formed by the vector with respect to the horizontal direction), normalized in the range [0-180°] or [-90° - + 90°].

In order to calculate the gradient modulus and orientation values, it is for example to proceed as follows: being $I(x,y)$ each pixel of the input image (the notation $(x,y)$ is omitted when unnecessary), the following is calculated:

- $Ix = I * Kx$, where '*' is the convolution operator, and Kx is an appropriate kernel for the calculation of the first derivative in x (e.g. $Kx = [1-1]$)
- $Iy = I * Ky$, where '*' is the convolution operator, and Ky is an appropriate kernel for the calculation of the first derivative in y (e.g. $Ky = [1; -1]$)

- $$\text{Grad}(x,y) = [\,Ix;\ Iy\,] = \text{gradient of } I(x,y)$$

- $$\text{gradient module} = \text{sqrt}(\,(Ix)^2 + (Iy)^2\,)$$

- $$\text{gradient orientation} = \text{arctan}(\,Iy\,/\,Ix\,)$$

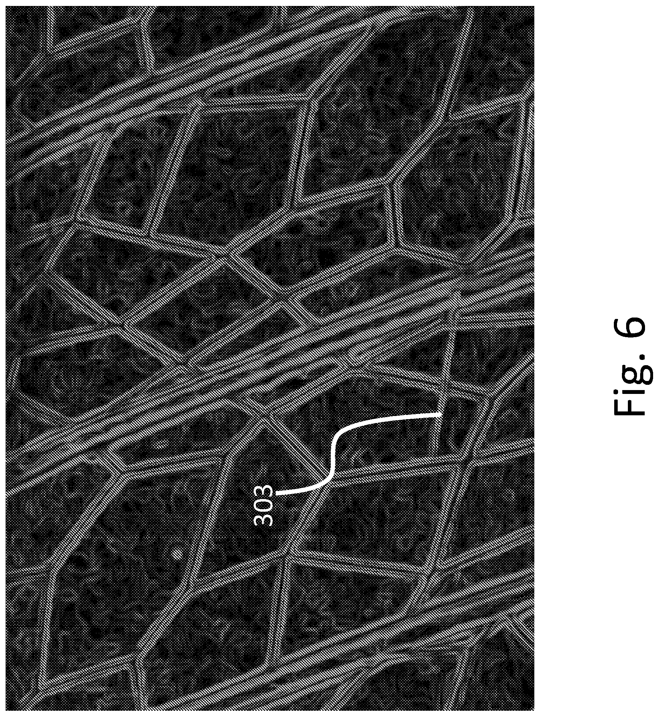

Figure 6 shows an exemplary visualization of a surface sub-portion corresponding to a central portion of the image in figure 3, in which each pixel is associated with a grey level representative of (e.g. proportional to) the gradient modulus in the considered pixel (e.g. light pixels correspond to a high gradient modulus and vice versa).

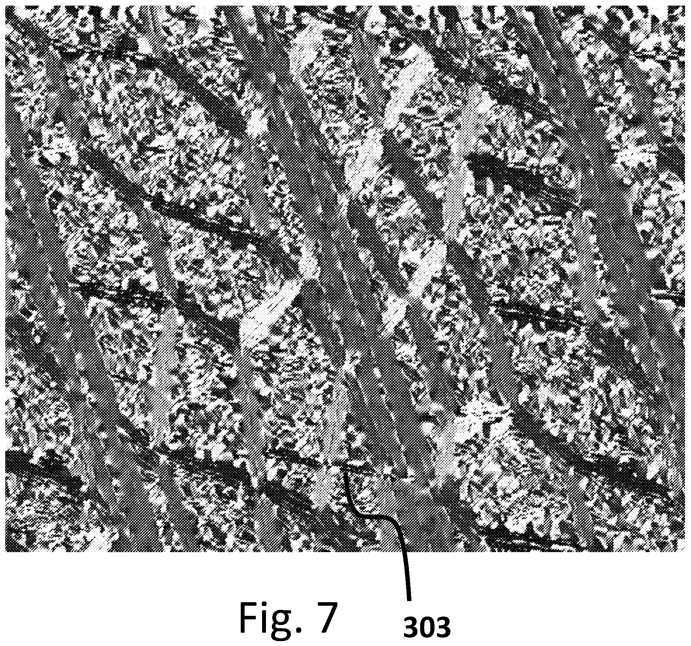

Figure 7 shows an exemplary visualization of the same surface sub-portion in figure 6, in which each pixel is associated with a grey level uniquely representative of the gradient orientation in the pixel considered.

A comparison between figures 6 and 7 shows that the low gradient modulus zones out of the pattern are characterized by a non-significant orientation value (variable disorderly).

As said above, by executing the following operations on the digital images as shown in figures 6 and 7: identifying a plurality of first regions; for each first region, identifying a respective plurality of homologous regions; and calculating a respective model, the pattern model is obtained in gradient modulus values and gradient orientation values, respectively. At this point, the resulting pattern model (be it in luminosity values and/or gradient modulus values and/or gradient orientation values) is subjected to dilation to introduce a tolerance that takes account of the deformations and/or drifts of the scheme in the pattern.

In a first preferred embodiment, the pattern model in gradient modulus values is first binarised (for example by thresholding with a single or double threshold) to obtain a binary model of the pattern.

Such binary model of the pattern is subjected to dilation (for example by means of a morphological processing operation) in order to obtain a dilated pattern binary model in which the pixels have an associated first binary index, the value of which is indicative of whether the pixel belongs or not to the dilated patterns, respectively (in order to distinguish in the first image the pixels belonging to the background from those belonging to the dilated pattern by comparison with said dilated binary model).

Moreover, also the gradient orientation values of the pattern model are preferably subjected to dilation. Preferably, each pixel of the dilated pattern binary model belonging to the dilated pattern is associated with a second index, the value of which is representative of the orientation of the dilated pattern section passing by the pixel: for example, the gradient orientation value of the pixel having maximum gradient modulus value in a predetermined neighbourhood (for example equal to 5-10 pixels of radius) of said each pixel in said pattern model may be selected.

In a second alternative embodiment, the gradient modulus values and the gradient orientation values of the pattern model are first both subjected to dilation. For example, each pixel of the dilated pattern model is assigned as gradient modulus value the maximum value of the gradient module in a predetermined neighbourhood of said pixel in the pattern model (said neighbourhood exemplarily having a radius equal to 5-10 pixels) and as gradient orientation value that associated with the pixel having said maximum gradient modulus value. Subsequently, the pattern model thus obtained is binarised based on the gradient modulus value, thereby obtaining the value of said first index.

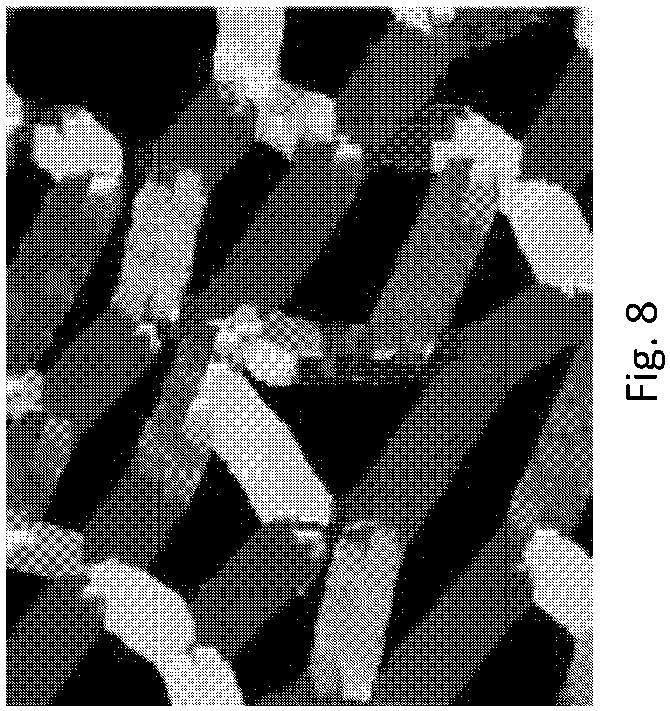

Figure 8 shows an example of pattern model obtained as a result of said operations in the two embodiments. Each pixel of the image in figure 8 not belonging to the dilated pattern but to the pattern background (for example having value of said first index equal to zero) is shown in black. Each pixel belonging to the dilated pattern (for example having value of said first index equal to one) is shown in a grey level other than black, where each grey level biuniquely corresponds to a value of the second index representative of the orientation of the corresponding segment of the dilated pattern passing by the considered pixel. As can be seen, the pixels outside the dilated pattern (black pixels) do not have an associated significant value of the second index.

Before making the comparison between the first image of the tyre acquired in diffuse light into luminosity values and the dilated pattern model as obtained above, it is advantageous to process such first image in order to highlight the potential defects of the rest of the image.

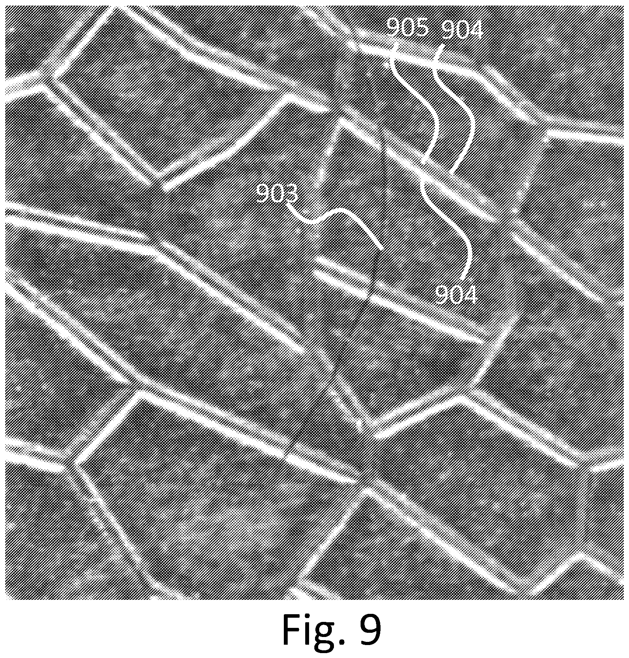

To support the description of the method for highlighting potential defects, reference will be made to figures 9-12.

Figure 9 exemplarily shows a visual representation in greyscale of a further example of a portion of the first image, of a similar nature to that shown in figure 3 and 3a, showing a further inner surface portion of a tyre illuminated with diffuse light, in which a defect 903 is present, consisting of a cut that crosses some segments of the pattern. On the surface portion in figure 9 there were traces of a release agent used in the bladder, in particular on the walls of the pattern segments. Since this release agent is highly reflective, such walls of the pattern segments in the image give rise to a pair of very bright parallel lines 904. A darker line 905 is present between the two bright lines which corresponds to the 'top' of the pattern segments, less dirty with release agent. In such a situation, in principle, segments 905 may be confused with cuts 903 as they have similar luminosity features.

In order to highlight the potential defects from the rest of the image, it is contemplated to calculate for each pixel of the first image in luminosity values a value representative of the main eigenvalue (or maximum eigenvalue) of the Hessian matrix in said pixel.

By way of example, the Hessian matrix is calculated as follows. Being, as above, I(x,y) each pixel of the input image, the following is calculated:

- $Ixx = I * Kxx$, where '*' is the convolution operator, and Kxx is an appropriate kernel for the calculation of the second derivative in x (e.g. $Kxx = [\,1\,\text{-}2\,1\,]$ row vector)
- $Iyy = I * Kyy$, where '*' is the convolution operator, and Kyy is an appropriate kernel for the calculation of the second derivative in y (e.g. $Kyy = [\,1;\,\text{-}2;\,1\,]$ column vector)

- Ixy = Iyx = I * Kxy where '*' is the convolution operator and Kxy is an appropriate kernel for the calculation of the mixed derivative

(e.g. the matrix Kxy = [ 1 0 -1 ; 0 0 0; -1 0 1 ] where ";" is the line separator).

The Hessian H = [ Ixx Ixy; Iyx Iyy ] is thus obtained.

From the Hessian matrix H, the eigenvectors and the eigenvalues are calculated, for example by the algorithm EVD (Eigen Value/Vector Decomposition).

Preferably, the main eigenvalue values are binarised by comparison with a first threshold value, in order to identify the candidate defect pixels like those pixels whose maximum eigenvalue associated is above such first threshold value.

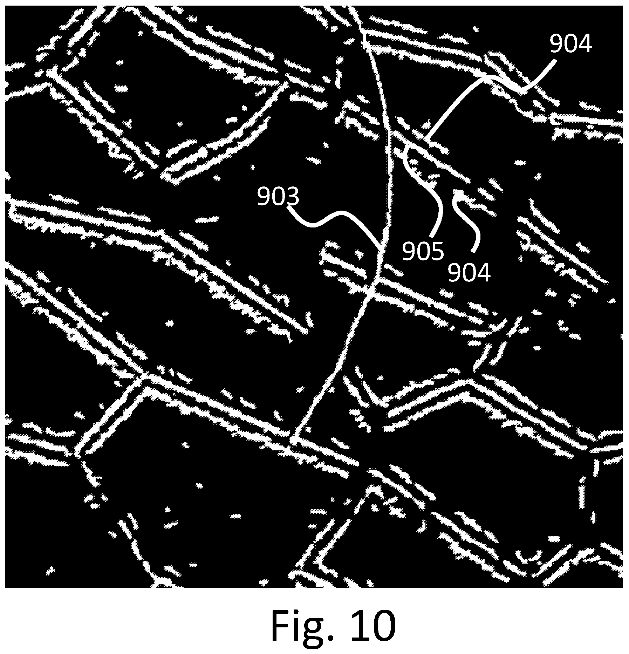

Figure 10 shows an exemplary visualisation of the first image portion substantially corresponding to that shown in figure 9, binarised on the basis of the main eigenvalue. It is noted that said binarisation has enhanced both the pixels belonging to cut 903 and the pixels at walls 904 (more precisely of the transition areas between the pattern background and walls 904) and of the central areas 905 of the pattern segments where the maximum eigenvalue is high.

In order to eliminate at least the pixels in the transition areas between the pattern background and the walls of the pattern segments from the candidate defects thus obtained, as well as other spurious pixel, it is contemplated to compare the gradient modulus values calculated on the luminosity values of the first image with a second threshold value and identify the pixels with a gradient modulus value smaller than such second threshold value as candidate defects.

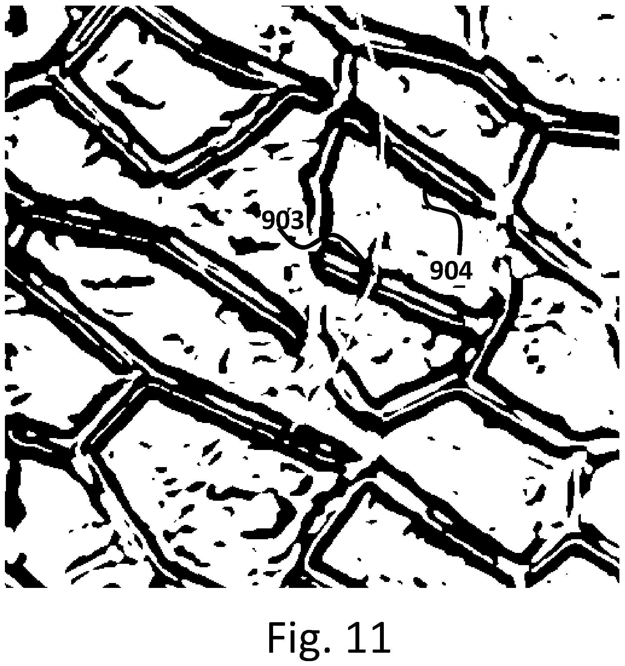

Figure 11 substantially shows the same image portion in figure 9 wherein the pixels have been binarised on the basis of the gradient modulus (optionally with appropriate edge smoothing operations). The white pixels are those with low gradient modulus value, i.e. smaller than the second threshold value. It is noted that pixels 904 at the edges of the pattern segments have a high gradient value.

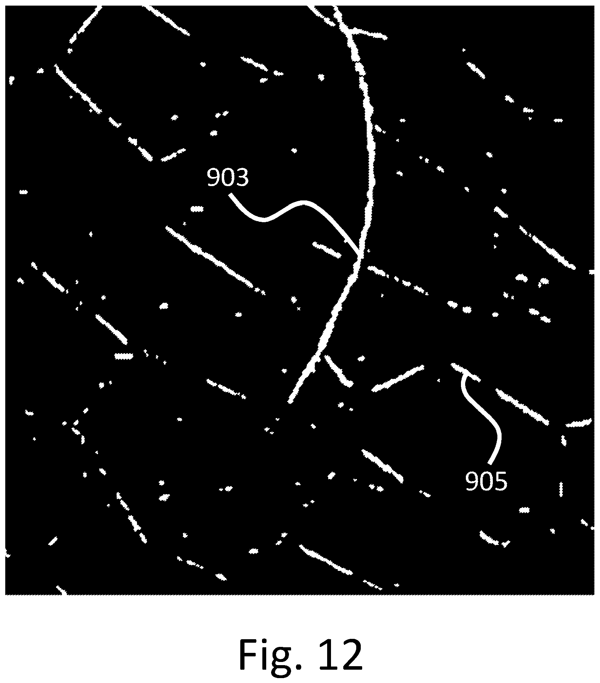

Figure 12 substantially shows the same image portion in figure 10, where the white pixels are the candidate defects obtained from the concurrent thresholding with said two threshold values (i.e. the white pixels both in figure 10 and in figure 11). It is noted that some pixels 905 remain as candidate defects at the centre of some pattern sections, while almost all pixels at the edges of the pattern sections have been substantially filtered by the criterion.

In order to further select the candidate defects, a third selection criterion is preferably provided, preferably used in combination with said two further criteria, based on the luminosity value in the image acquired in diffuse light. In particular, such luminosity value is compared with a third threshold value and all the candidate defect pixels as identified above are selected, which also have the luminosity value below the third threshold value.

At this point, it is possible to make the comparison between the candidate defect pixels thus selected with the dilated pattern model free from defects as calculated above, in order to detect any defects in the surface portion as a function of such comparison.

Preferably, a first set of pixels is identified among said candidate defect pixels for which the corresponding pixels in the dilated pattern model do not belong to the dilated pattern (for example with reference to figure 8, the black 'background' areas), to identify the defects (or defect portions) located outside the pattern, i.e. belonging to the pattern 'background'. Preferably, it is contemplated to identify a second set of pixels among said candidate defect pixels that have the corresponding pixel in the pattern model belonging to the pattern (for example the pixels in grey level other than black in figure 8), for which the at least local orientation of the pattern section passing by said dilated pattern model (represented by said second value, e.g. the orientation value of the dilated gradient) is significantly different (for example, the difference is greater than 20°) from the orientation of the section formed by said candidate defects and passing by said pixel. In that case, such candidate defect section passing by said pixel is probably a cut having a portion that intersects with a pattern section in said dilated pattern model.

In a first embodiment, the orientation of the section formed by said candidate defects and passing by said pixel is represented by the gradient orientation value in said pixel calculated as described above on the luminosity values in the first image in diffuse light.

In a second embodiment, the orientation of the section formed by said candidate defects and passing by said pixel is represented by the orientation of the main eigenvector of the Hessian matrix in said pixel calculated as described above on the luminosity values in the first image in diffuse light.

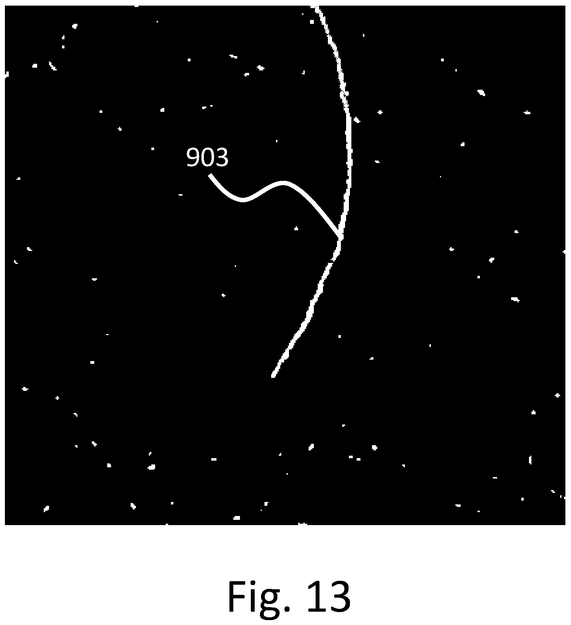

Preferably, it is contemplate to merge (in OR logic) the first and second set of pixels to form a final image (typically binary) representative of said surface portion wherein the pixels corresponding to said first and second set are distinct from the remaining pixels, as exemplarily shown in figure 13, where it is seen that both the cutting portion at the pattern background and the cut portion at the dilated pattern has been identified.

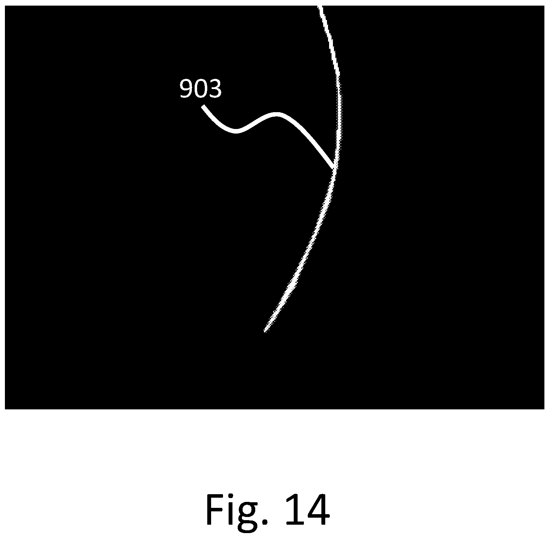

Preferably, appropriate morphological processing can be carried out on said pixels in order to discard false candidate defects. For example, the isolated pixels blocks or the connected pixel regions ('blob') that are not compatible with the defects sought are eliminated; in particular, the selection can be made by area and/or length. Figure 14 shows the end result of a processing of this type carried out on the image in figure 13.

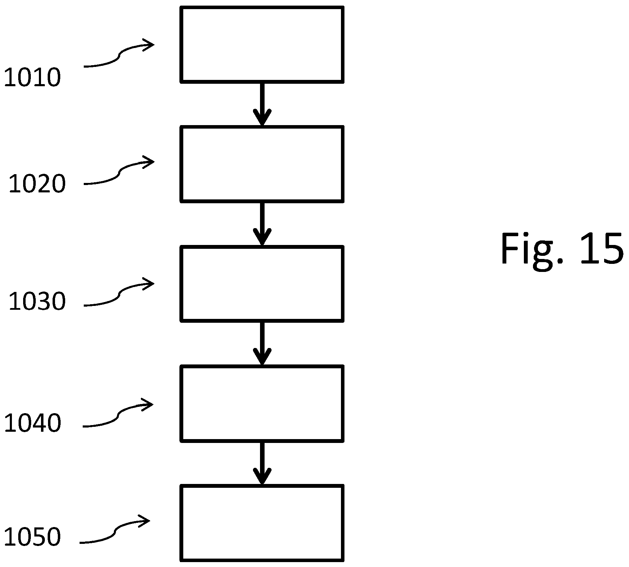

Figure 15 shows a flowchart in which operation 1010 represents the operation of providing the tyre having the surface to be analysed.

Operation 1020 represents the operation of acquiring at least one digital image of a portion of said surface, wherein each pixel of said image is associated with a luminosity value representative of the reflectivity and/or diffusivity and/or colour of a point of the surface corresponding to said each pixel.

Operation 1030 represents the operation of calculating, for each pixel of said digital image, a first parameter representative of a second derivative calculated in said pixel on said luminosity values.

Operation 1040 represents the operation of establishing whether each pixel belongs to a candidate defect as a function of said first parameter.

Operation 1050 represents the operation of comparing the pixels candidate to be defects with a digital model of the surface portion without defects and detecting possible defects in said surface portion as a function of said comparison.

## Claims

1. Method for detecting defects on a surface of a tyre, comprising:

   - providing the tyre (200) having said surface;
   - acquiring at least one digital image of a portion of said surface, wherein each pixel of said image is associated with a luminosity value representative of the reflectivity and/or diffusivity and/or colour of a point of the surface corresponding to said each pixel;
   - calculating, for each pixel of said digital image, a first parameter representative of a second derivative calculated in said pixel on said luminosity values;
   - establishing whether each pixel belongs to a candidate defect as a function of said first parameter by comparing said first parameter with at least one first threshold value;
   - calculating, for each pixel of said digital image, a second parameter representative of a modulus of a gradient in said pixel and establishing whether each pixel belongs to a candidate defect also as a function of said second parameter by comparing said second parameter with a second threshold value; and
   - comparing the pixels candidate to be defects with a digital model of the surface portion without defects and detecting possible defects in said surface portion as a function of said comparison.

2. Method as claimed in claim 1, further comprising, for each pixel, identifying a possible main local extension direction of a possible structure passing through said pixel, wherein said first parameter is representative of the second derivative calculated along a direction orthogonal to said main local extension direction.

3. Method as claimed in claim 1 or 2, wherein said first parameter is representative of a principal eigenvalue of a Hessian matrix.

4. Method as claimed in claim 3, wherein calculating said first parameter comprises calculating said Hessian matrix and extracting therefrom said principal eigenvalue and a relative principal eigenvector, and a secondary eigenvalue and relative secondary eigenvector.

5. Method as claimed in any one preceding claim, comprising binarising said at least one image based on the comparison between said first parameter and said first threshold value.

6. Method as claimed in any one preceding claim, comprising binarising said digital image also on the basis of the comparison between said second parameter and said second threshold value.

7. Method as claimed in any one preceding claim, comprising establishing whether each pixel belongs to a candidate defect also as a function of the respective luminosity value.

8. Method as claimed in claim 7, comprising comparing said luminosity value with a third threshold value.

9. Method as claimed in any one preceding claim, wherein said surface is an inner surface or a tread surface of the tyre.

10. Method as claimed in any one preceding claim, wherein said defects are thin and have an elongated shape.

11. Method as claimed in the preceding claim, wherein said defects are cuts.

12. Apparatus (1) for analysing tyres in a tyre production line, the apparatus comprising:

    - a support (102) for a tyre (200), adapted to rotate around an axis (201) perpendicular thereto;
    - at least one source (104) adapted to emit at least one light radiation for illuminating a surface portion (221) of the tyre, when set on the support, and, at a distance from said source, a detection system (105) adapted to detect an optical intensity of the light radiation reflected and/or diffused by said surface portion; and
    - a processing unit (140) configured for actuating the method as claimed in any one preceding claim.

**Patentansprüche**

1. Verfahren zum Detektieren von Defekten auf einer Oberfläche eines Reifens, umfassend:

   - Bereitstellen des Reifens (200), der die Oberfläche aufweist;
   - Erfassen mindestens eines digitalen Bildes eines Abschnitts der Oberfläche, wobei jedem Pixel des Bildes ein Helligkeitswert zugeordnet ist, der die Reflektivität und/oder Diffusionsfähigkeit und/oder Farbe eines Oberflächenpunkts darstellt, der jedem Pixel entspricht;
   - Berechnen eines ersten Parameters für jedes Pixel des digitalen Bildes, der eine in dem Pixel berechnete zweite Ableitung der Helligkeitswerte darstellt;
   - Feststellen, ob jedes Pixel zu einem möglichen Defekt gehört, als eine Funktion des ersten Parameters durch Vergleichen des ersten Parameters mit mindestens einem ersten Schwellenwert;
   - Berechnen eines zweiten Parameters für jedes Pixel des digitalen Bildes, der einen Modul eines Gradienten in dem Pixel darstellt, und Feststellen, ob jedes Pixel zu einem möglichen Defekt gehört, ebenfalls als eine Funktion des zweiten Parameters, indem der zweite Parameter mit einem zweiten Schwellenwert verglichen wird; und
   - Vergleichen der als Defekte in Frage kommenden Pixel mit einem digitalen Modell des Oberflächenabschnitts ohne Defekte und Detektieren möglicher Defekte in dem Oberflächenabschnitt als eine Funktion des Vergleichs.

2. Verfahren nach Anspruch 1, das weiter für jedes Pixel Identifizieren einer möglichen lokalen Hauptausdehnungsrichtung einer möglichen Struktur umfasst, die durch das Pixel verläuft, wobei der erste Parameter die zweite Ableitung darstellt, die entlang einer Richtung berechnet wird, die orthogonal zu der lokalen Hauptausdehnungsrichtung ist.

3. Verfahren nach Anspruch 1 oder 2, wobei der erste Parameter einen Haupteigenwert einer Hesse-Matrix darstellt.

4. Verfahren nach Anspruch 3, wobei Berechnen des ersten Parameters Berechnen der Hesse-Matrix und Extrahieren des Haupteigenwerts und eines relativen Haupteigenvektors sowie eines sekundären Eigenwerts und eines relativen sekundären Eigenvektors daraus umfasst.

5. Verfahren nach einem vorstehenden Anspruch, umfassend Binarisieren des mindestens einen Bildes auf der Grundlage des Vergleichs zwischen dem ersten Parameter und dem ersten Schwellenwert.

6. Verfahren nach einem vorstehenden Anspruch, umfassend Binarisieren des digitalen Bildes, auch auf der Grundlage des Vergleichs zwischen dem zweiten Parameter und dem zweiten Schwellenwert.

7. Verfahren nach einem vorstehenden Anspruch, umfassend Feststellen, ob jedes Pixel zu einem möglichen Defekt gehört, auch als eine Funktion des jeweiligen Helligkeitswerts.

8. Verfahren nach Anspruch 7, umfassend Vergleichen des Helligkeitswerts mit einem dritten Schwellenwert.

9. Verfahren nach einem vorstehenden Anspruch, wobei es sich bei der Oberfläche um eine Innenfläche oder eine Lauffläche des Reifens handelt.

10. Verfahren nach einem vorstehenden Anspruch, wobei die Defekte dünn sind und eine längliche Form aufweisen.

11. Verfahren nach dem vorstehenden Anspruch, wobei es sich bei den Defekten um Schnitte handelt.

12. Einrichtung (1) zum Analysieren von Reifen in einer Reifenproduktionslinie, wobei die Einrichtung Folgendes umfasst:

   - eine Halterung (102) für einen Reifen (200), die dazu ausgebildet ist, sich um eine dazu senkrechte Achse (201) zu drehen;
   - mindestens eine Quelle (104), die dazu ausgebildet ist, mindestens eine Lichtstrahlung zum Beleuchten eines Oberflächenabschnitts (221) des Reifens auszusenden, wenn dieser auf der Halterung angeordnet ist, und, in einem Abstand von der Quelle, ein Detektionssystem (105), das dazu ausgebildet ist, eine optische Intensität der durch den Oberflächenabschnitt reflektierten und/oder gestreuten Lichtstrahlung zu detektieren; und
   - eine Verarbeitungseinheit (140), die zum Ausführen des Verfahrens nach einem vorstehenden Anspruch konfiguriert ist.

**Revendications**

1. Procédé de détection de défauts sur une surface d'un pneumatique, comprenant :

   - la fourniture du pneumatique (200) présentant ladite surface ;
   - l'acquisition d'au moins une image numérique d'une portion de ladite surface, dans lequel chaque pixel de ladite image est associé à une valeur de luminosité représentative de la réflectivité et/ou diffusivité et/ou couleur d'un point de la surface correspondant audit chaque pixel ;

- le calcul, pour chaque pixel de ladite image numérique, d'un premier paramètre représentatif d'une seconde dérivée calculée dans ledit pixel sur lesdites valeurs de luminosité ;

- l'établissement du fait que chaque pixel appartient ou non à un défaut candidat en fonction dudit premier paramètre en comparant ledit premier paramètre avec au moins une première valeur seuil ;

- le calcul, pour chaque pixel de ladite image numérique, d'un second paramètre représentatif d'un module d'un gradient dans ledit pixel et l'établissement du fait que chaque pixel appartient ou non à un défaut candidat également en fonction dudit second paramètre en comparant ledit second paramètre à une deuxième valeur seuil ; et

- la comparaison des pixels candidats à être des défauts avec un modèle numérique de la portion de surface sans défauts et la détection d'éventuels défauts dans ladite portion de surface en fonction de ladite comparaison.

2. Procédé selon la revendication 1, comprenant en outre, pour chaque pixel, l'identification d'une direction d'extension locale principale possible d'une structure possible passant par ledit pixel, dans lequel ledit premier paramètre est représentatif de la seconde dérivée calculée le long d'une direction orthogonale à ladite direction d'extension locale principale.

3. Procédé selon la revendication 1 ou 2, dans lequel ledit premier paramètre est représentatif d'une valeur propre principale d'une matrice hessienne.

4. Procédé selon la revendication 3, dans lequel le calcul dudit premier paramètre comprend le calcul de ladite matrice hessienne et, à partir de celle-ci, l'extraction de ladite valeur propre principale et d'un vecteur propre principal relatif, et d'une valeur propre secondaire et d'un vecteur propre secondaire relatif.

5. Procédé selon une quelconque revendication précédente, comprenant la binarisation de ladite au moins une image sur la base de la comparaison entre ledit premier paramètre et ladite première valeur seuil.

6. Procédé selon une quelconque revendication précédente, comprenant la binarisation de ladite image numérique également sur la base de la comparaison entre ledit second paramètre et ladite deuxième valeur seuil.

7. Procédé selon une quelconque revendication précédente, comprenant l'établissement du fait que chaque pixel appartient ou non à un défaut candidat également en fonction de la valeur de luminosité respective.

8. Procédé selon la revendication 7, comprenant la comparaison de ladite valeur de luminosité avec une troisième valeur seuil.

9. Procédé selon une quelconque revendication précédente, dans lequel ladite surface est une surface intérieure ou une surface de bande de roulement du pneumatique.

10. Procédé selon une quelconque revendication précédente, dans lequel lesdits défauts sont minces et présentent une forme allongée.

11. Procédé selon la revendication précédente, dans lequel lesdits défauts sont des coupures.

12. Appareil (1) pour analyser des pneumatiques dans une chaîne de production de pneumatiques, l'appareil comprenant :

- un support (102) pour un pneumatique (200), adapté pour tourner autour d'un axe (201) perpendiculaire à celui-ci ;
- au moins une source (104) adaptée pour émettre au moins un rayonnement lumineux pour éclairer une portion de surface (221) du pneumatique, lorsqu'il est posé sur le support, et, à distance de ladite source, un système de détection (105) adapté pour détecter une intensité optique du rayonnement lumineux réfléchi et/ou diffusé par ladite portion de surface ; et
- une unité de traitement (140) configurée pour actionner le procédé selon une quelconque revendication précédente.

Fig.1

EP 3 317 635 B1

Fig.2

Fig. 3

EP 3 317 635 B1

Fig. 3a

307

Fig. 4

Fig. 5

308

Fig. 6

Fig. 7

303

Fig. 8

Fig. 9

Fig. 10

Fig. 11

Fig. 12

Fig. 13

EP 3 317 635 B1

Fig. 14

EP 3 317 635 B1

1010

1020

1030

1040

1050

Fig. 15

**EP 3 317 635 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013045594 A1

**Non-patent literature cited in the description**

- A Hessian-based methodology for automatic surface crack detection and classification from pavement images. **GHANTA SINDHU et al.** OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X. SPIE, 01 April 2015, vol. 9437, 94371Z-94371Z